(19) Europäisches Patentamt
European Patent Office
Office européen des brevets

(11) **EP 3 387 742 B1**

(12) **FASCICULE DE BREVET EUROPEEN**

(45) Date de publication et mention de la délivrance du brevet:
**27.11.2019 Bulletin 2019/48**

(21) Numéro de dépôt: **16816325.1**

(22) Date de dépôt: **06.12.2016**

(51) Int Cl.:
*H02K 21/24* (2006.01)    *H02K 1/27* (2006.01)
*H02K 29/03* (2006.01)

(86) Numéro de dépôt international:
**PCT/FR2016/000203**

(87) Numéro de publication internationale:
**WO 2017/098094 (15.06.2017 Gazette 2017/24)**

(54) **ROTOR D'UN MOTEUR ÉLECTROMAGNÉTIQUE À FLUX AXIAL À AIMANT MONOBLOC DE FORME ONDULÉE**

ROTOR FÜR EINEN ELEKTROMAGNETISCHEN AXIALFLUSSMOTOR MIT WELLIGEM INTEGRIERTEM MAGNET

ROTOR OF AN AXIAL-FLOW ELECTROMAGNETIC MOTOR HAVING A CORRUGATED-SHAPE INTEGRAL MAGNET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2015 FR 1502577**

(43) Date de publication de la demande:
**17.10.2018 Bulletin 2018/42**

(73) Titulaire: **Whylot SAS**
**46100 Cambes (FR)**

(72) Inventeurs:
• **TIEGNA, Huguette**
  **F-46100 Figeac (FR)**
• **SAVIN, Serghei**
  **F-12700 Capdenac Gare (FR)**
• **MIHAILA, Vasile**
  **F-46100 Figeac (FR)**
• **RAVAUD, Romain**
  **F-46240 Labastide Murat (FR)**

(56) Documents cités:
**CN-A- 103 904 852    JP-A- S5 553 164
JP-A- S58 170 347**

**Description**

La présente invention concerne un rotor d'un moteur électromagnétique à flux axial à un unique aimant monobloc de forme ondulée sur deux faces.

La présente invention concerne aussi un actionneur électrique avec au moins un rotor encadré par deux stators. L'actionneur électrique peut donc comprendre aussi un nombre n de rotors supérieur à 1 encadré par n+1 stators.

La présente invention trouve une application avantageuse mais non limitative dans un moteur électrique délivrant une forte puissance avec une vitesse de rotation du rotor élevée tout en étant d'un encombrement faible, ce qui est obtenu par les caractéristiques spécifiques du rotor selon la présente invention.

De manière connue, un moteur électromagnétique comprend au moins un stator et au moins un rotor, un entrefer séparant ces deux éléments. Le rotor porte au moins un aimant permanent, avantageusement une série d'aimants permanents, tandis qu'au moins une série d'éléments de bobinage est portée par le stator.

De manière classique, chacun des éléments de bobinage comprend une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour un actionneur électrique à flux axial.

La demande d'actionneurs ou de moteurs électriques pouvant délivrer une puissance élevée tout en gardant un poids et un encombrement réduits est actuellement très forte.

Il est connu que la puissance P délivrée par un actionneur électrique est égale au couple C de la machine que multiplie la vitesse angulaire de rotation ω de la machine soit :

$$P = C.\,\omega$$

Pour augmenter la puissance, il convient d'augmenter le couple ou la vitesse angulaire ou vitesse de rotation ou les deux à la fois.

On différencie ainsi des moteurs à fort couple des moteurs à haute vitesse. Les moteurs à fort couple sont des moteurs qui ne tournent pas forcément vite, mais pour lesquels la valeur du couple compense la faiblesse de cette vitesse de rotation. Les moteurs dits puissants sont ceux pour lesquels la valeur du couple n'est pas forcément très élevée mais qui tournent vite.

Pour l'obtention d'un moteur à fort couple, il convient d'avoir une surface d'aimant portée par le rotor et une série de bobinages sur le stator suffisamment importantes pour créer un fort couple. Cela présente des désavantages notoires.

Le premier désavantage est le poids d'un tel moteur avec des surfaces d'aimant et de bobinage importantes. Un tel moteur pèse lourd et présente un encombrement important.

Le deuxième désavantage est aussi son prix, le prix des aimants étant élevé de même que le prix des bobinages fréquemment fait à base de fils de cuivre.

Ces deux désavantages et principalement le premier freinent l'utilisation de moteurs électriques pour la propulsion de véhicules automobiles, étant donné que l'encombrement et le poids d'un tel moteur sont très préjudiciables à son embarquement dans un véhicule automobile pour lequel la diminution du poids et de l'encombrement des éléments embarqués est cruciale.

Le troisième désavantage d'un moteur à fort couple est son refroidissement étant donné que les pertes par effet Joule d'un tel moteur sont importantes.

Ainsi, pour réduire l'encombrement d'un tel moteur en lui conférant une structure compacte, le risque de surchauffe du rotor est augmenté, d'autant plus que ce rotor comprend une surface d'aimants élevée pour obtenir un fort couple. Il se crée des courants de Foucault dans le moteur avec une augmentation de la température dans le moteur et éventuellement une perturbation des flux magnétiques créés, ce qui présente aussi le risque de diminution du rendement du moteur.

Dans ce cas, il convient de procéder au refroidissement du moteur et donc de le munir d'un dispositif de refroidissement ce qui augmente son poids et son encombrement de même que sa complexité.

Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Dans les applications embarquées et industrielles, en plus de la réduction de la masse et de l'encombrement du moteur pour un rendement optimal, la réduction du couple de détente et de la variation du couple total sont des critères très importants pour la précision et le confort du fonctionnement de l'actionneur ou du moteur.

En effet, des moteurs ou actionneurs à aimants permanents présentent le désavantage de posséder hors tension un couple résiduel appelé couple de détente. Ce couple de détente, appelé aussi cogging torque en anglais, est dû à l'interaction magnétique entre les aimants permanents de l'élément à aimants permanents, par exemple le rotor, et le fer présent dans l'élément à bobinage, par exemple le stator, le fer étant fréquemment utilisé pour la réalisation des dents et/ou des parois des encoches du moyen de support du bobinage. Ce couple est indésirable pour le bon fonctionnement d'un tel moteur.

Le document CN-A-103 904 852 représente l'état de la technique le plus proche et décrit un rotor destiné à un moteur électromagnétique à flux axial comportant des aimants formant une couronne, avec deux faces des aimants destinées à être respectivement en vis-à-vis et à délimiter un entrefer avec un circuit magnétique d'un stator. Le rotor selon ce document est destiné à être intercalé entre deux stators. Cependant il nécessite deux rangées d'aimants ondulées, ce qui rend sa fabrication coûteuse.

Le document JP-A-S55 53164 décrit un rotor de moteur à flux axial à simple entrefer. Il n'y a donc aucun besoin que des faces opposées d'un aimant monobloc présente chacune une sinusoïde. Le rotor à aimants permanents décrit dans ce document est réalisé en agençant un type de bloc d'aimants au même nombre que le nombre de pôles du moteur dans la direction circonférentielle et alternativement hétéropolaire sur la surface d'un rotor. Ce document ne décrit qu'un rotor portant des aimants ondulés logé entre deux stators. Comme les aimants sont des aimants individuels, les désavantages mentionnés à l'encontre du rotor du document CN-A-103 904 852 sont aussi applicables pour le rotor de ce document.

Pour un actionneur avec deux stators, les ondulations doivent donc être présentes pour chaque face du rotor formant un entrefer, ce qui n'est pas le cas du dernier document cité. Ne munir qu'une seule face de l'aimant d'ondulations peut provoquer des déséquilibres dans le fonctionnement du rotor ou dans le meilleur des cas ne constituer qu'une solution partielle au problème de la création d'un couple de détente.

Pour les deux documents munir un rotor d'aimants individuels accroît le prix de sa fabrication et le rend fragile surtout à grande vitesse pour laquelle les aimants peuvent se décoller.

Le problème de la présente invention est de remédier aux inconvénients précédemment cités, avec notamment une réduction du couple de détente et de la variation du couple total et un rotor résistant aux grandes vitesses sans risque de perte d'aimants.

A cet effet, on prévoit selon l'invention un rotor destiné à un moteur électromagnétique à flux axial comportant au moins un aimant formant une couronne, avec deux faces dudit au moins un aimant destiné à être respectivement en vis-à-vis et à délimiter un entrefer avec un circuit magnétique d'un stator, caractérisé en ce que ledit au moins un aimant est monobloc avec deux faces opposées destinées à être en vis-à-vis d'un circuit magnétique respectif, les deux faces étant de forme non plane en présentant des ondulations.

Selon la présente invention, il y a donc un seul aimant réalisant les entrefers avec chacun des deux stators. L'ensemble est plus compact et il y a moins de matière dans le rotor qui ne sert pas à l'aimantation. Le fait que l'aimant monobloc soit ondulé sur chacune de ses faces en vis-à-vis d'un circuit magnétique permet de conserver une symétrie dans l'actionneur électrique favorable à la diminution du couple de détente.

De plus, le rotor est plus résistant car l'aimant monobloc présente moins de risque de décollement partiel qu'un groupe d'aimants qui peut perdre un ou des aimants. Sa fabrication est plus facile car il n'est pas nécessaire de loger des aimants dans leur logement respectif, ce qui prend du temps. Il n'y a pas non plus de logements individuels pour les aimants mais un logement unique pour l'aimant monobloc, ce qui est plus facile de fabrication.

L'effet technique principal obtenu est de permettre de réduire le couple de détente. Comme le rotor selon l'invention est destiné à être intercalé entre deux stators, il convient que les deux faces opposées du rotor soient de forme non plane en présentant des ondulations.

Le couple de détente est une source de vibrations et de bruit dans les machines à aimants permanents. Sa réduction est essentielle pour certaines applications telles que les applications embarquées et pour cela il est nécessaire de réduire le taux d'harmoniques et d'avoir une force électromotrice de forme sinusoïdale. En effet la force électromotrice doit avoir la même forme que les courants d'alimentation qui sont de préférence sinusoïdaux. Les ondulations des deux faces opposées du rotor concourent à la création d'une force électromotrice sinusoïdale.

Avantageusement, les ondulations forment sur chaque face une succession d'arrêtes supérieures et inférieures, les arrêtes s'étendant sensiblement en direction du centre de la couronne formée par l'aimant monobloc.

Avantageusement, chaque arrête supérieure est intercalée entre deux arrêtes inférieures en faisant varier une épaisseur de l'aimant monobloc sous forme d'une sinusoïde quand elle est dépliée. La sinusoïde est la forme d'ondulations préférée en regard de ce qui a précédemment été mentionné dans l'effet technique.

Avantageusement, la sinusoïde est de période constante.

Avantageusement, chaque face de l'aimant monobloc est constituée successivement de plusieurs pôles magnétiques, chaque pôle étant incliné d'un angle d'inclinaison des extrémités d'un pôle magnétique par rapport à leur position initiale passant par le milieu d'une encoche, l'angle d'inclinaison induisant un angle de décalage du rotor autour de son axe de rotation.

Cette caractéristique préférentielle présente de nombreux avantages. L'inclinaison de pôles magnétiques de l'aimant monobloc entraîne une diminution du couple de détente ainsi que des variations du couple total.

Il est ainsi combiné l'aspect sinusoïdal des deux faces avec une inclinaison de l'aimant monobloc constitué de plusieurs pôles nord et sud. Les aimants sinusoïdaux et l'inclinaison des ces aimants sont complémentaires et permettent d'une part la réduction du taux d'harmoniques et des pertes par courants de Foucault dans l'actionneur électromagnétique et aussi de n'avoir qu'un faible couple de détente et une faible variation de couple, par exemple mais non limitativement afin de répondre aux exigences de l'application automobile pour une direction assistée.

Avantageusement, l'aimant monobloc comprend des tuiles polygonales ondulées reliées entre elles directement ou indirectement par des moyens de solidarisation, les moyens de solidarisation étant latéraux à l'aimant monobloc et/ou disposés en dessous de l'aimant monobloc.

Avantageusement, les moyens de solidarisation permettent de maintenir les tuiles polygonales ondulées contre un corps formant partie du rotor.

Avantageusement, l'aimant monobloc présente un évidement central.

Avantageusement, le rotor comprend un arbre de sortie présentant un épaulement s'étendant perpendiculairement à l'arbre dans une portion médiane de l'arbre, l'épaulement étant logé dans l'évidement central de l'aimant monobloc.

Avantageusement, l'aimant monobloc est choisi parmi les aimants ferrites, les aimants à base de terres rares comme des aimants néodyme-fer-bore ou des aimants samarium cobalt, des aimants à base d'aluminium, de nickel et de cobalt, avec ou sans liant thermoplastique.

L'invention concerne un moteur électromagnétique à flux axial présentant au moins deux stators portant une série d'éléments de bobinage faisant partie d'un circuit magnétique et au moins un rotor portant l'aimant monobloc avec formation d'un entrefer entre l'aimant monobloc et chaque série d'éléments de bobinage, caractérisé en ce que ledit au moins un rotor est un rotor tel que précédemment décrit, le moteur présentant au moins deux entrefers, le corps du rotor portant l'aimant monobloc présentant des ondulations sur les faces en vis-à-vis de chaque série d'éléments de bobinage.

L'invention concerne aussi un moteur et/ou une génératrice électromagnétique, caractérisé en ce qu'il comprend un tel rotor, le moteur ou la génératrice ayant un fonctionnement réversible.

Avantageusement, quand l'aimant monobloc est constitué successivement de plusieurs pôles magnétiques, chaque pôle est incliné d'un angle par rapport à un pas d'encoche correspondant à un angle d'ouverture formé d'une ouverture angulaire d'une dent du stator portant un élément de bobinage et d'une ouverture angulaire d'une encoche, les encoches logeant les éléments de bobinage faisant partie du circuit magnétique du stator.

L'inclinaison des aimants entraîne une diminution du couple de détente ainsi que des variations du couple total. L'inclinaison des encoches du stator entraîne le même effet. De ce fait, la combinaison des deux inclinaisons amplifie la diminution du couple de détente et les variations du couple total en ayant un effet de synergie.

D'autres caractéristiques, buts et avantages de la présente invention apparaîtront à la lecture de la description détaillée qui va suivre et au regard des dessins annexés donnés à titre d'exemples non limitatifs et sur lesquels :

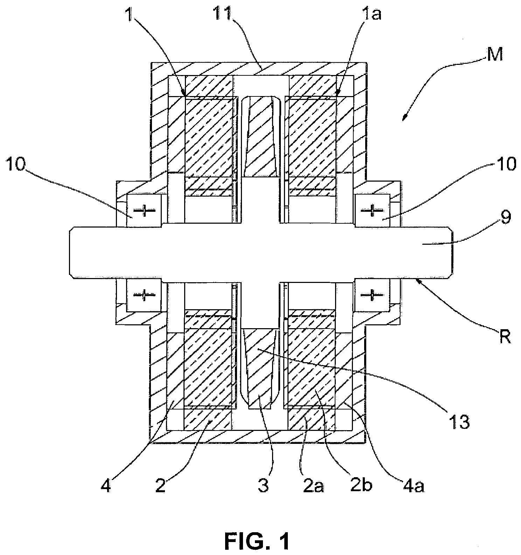

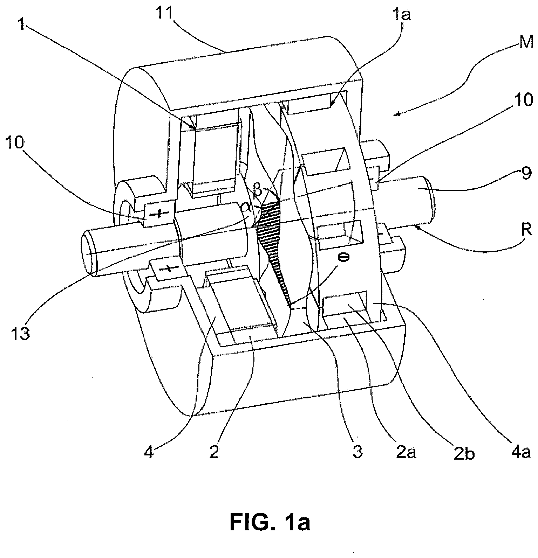

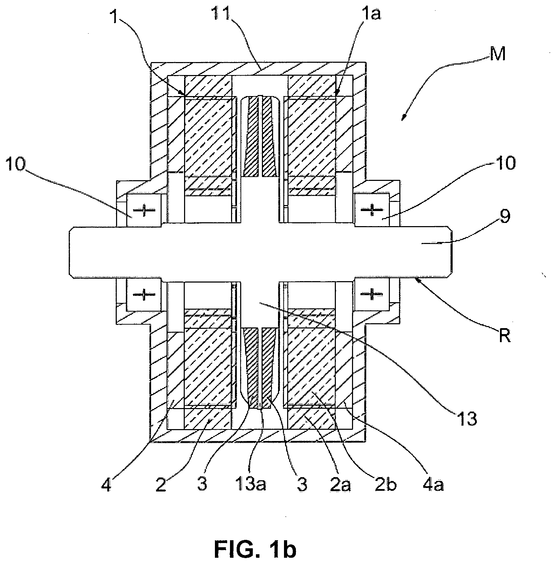

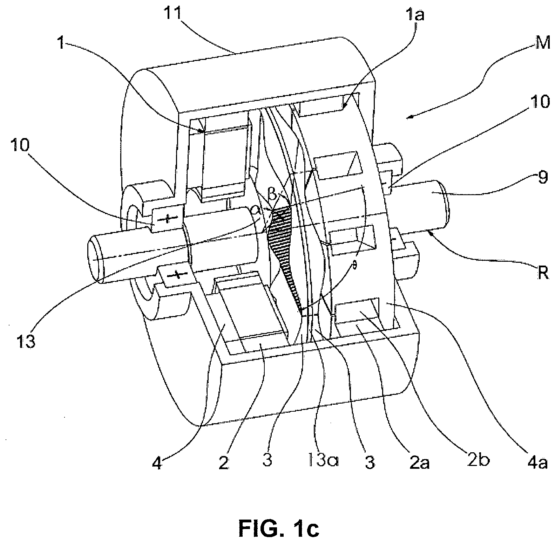

- les figures 1 et 1b sont des représentations schématiques d'une vue en coupe axiale de deux modes de réalisation respectifs d'un moteur électromagnétique polyentrefers à flux axial intégré, le rotor selon la présente invention de ce moteur portant vers chaque stator une face externe ondulée d'au moins un aimant, le moteur électromagnétique selon ce mode de réalisation comprenant deux stators et un rotor, la figure 1 montrant un aimant sans corps et la figure 1b un aimant avec un corps intercalé,

- les figures 1a et 1c sont des représentations schématiques d'une vue en perspective des deux modes de réalisation respectifs d'un moteur électromagnétique polyentrefers à flux axial intégré, le rotor selon la présente invention de ce moteur portant vers chaque stator une face externe ondulée d'au moins un aimant, le moteur électromagnétique selon ce mode de réalisation comprenant deux stators et un rotor, la figure 1a montrant un aimant sans corps et la figure 1c un aimant avec un corps intercalé,

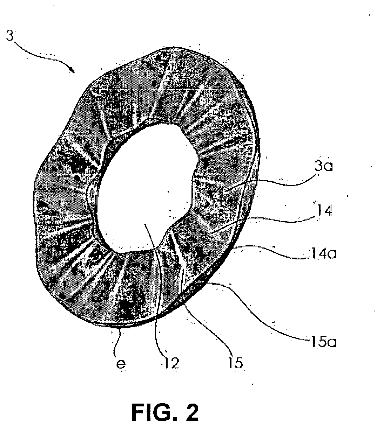

- la figure 2 est une représentation en perspective d'un aimant monopièce ou monobloc formant la face ondulée d'un corps de rotor selon la présente invention,

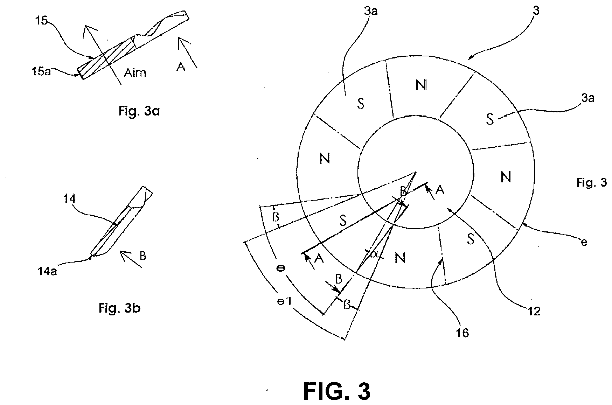

- la figure 3 est une représentation schématique d'une vue de face d'une pluralité d'aimants ondulés formant une couronne, cette pluralité d'aimants ondulés pouvant être portée par un rotor non conforme à la présente invention tandis que les figures 3a et 3b montrent des coupes transversales de la couronne respectivement selon A-A et B-B comme indiqué à la figure 3.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité. En particulier les rotors formés de plusieurs aimants ne font pas partie de la présente invention mais sont donnés à titre illustratif.

En se référant à toutes les figures, notamment à la figure 1, il est montré une vue longitudinale du moteur M électromagnétique présentant un double entrefer ayant un rotor R avec ou sans fer portant vis-à-vis de chaque entrefer un aimant unique monobloc.

L'aimant monobloc 3 peut être d'un seul tenant ou formé de plusieurs parties mais en aucun cas ces parties sont amovibles ou séparées de l'aimant monobloc qui forme un tout.

Comme il est visible notamment aux figures 1b et 1c, le rotor R peut comprendre un corps 13a supportant l'aimant unique monobloc sur chacune de ses faces, avec une rainure pratiquée dans l'unique aimant pour la réception du corps 13a. Le corps 13a et l'aimant monobloc 3 sur chacune des faces du corps 13a sont placés entre deux stators 1, 1a ayant un circuit magnétique 4, 4a et comportant une série d'éléments de bobinage 2, 2a, logée dans des encoches 2b faisant partie d'un circuit magnétique du stator la portant.

Aux figures 1 et 1a, un corps différent de l'aimant monobloc 3 n'est pas présent étant donné que l'aimant monobloc 3 occupe toute la section.

Cependant, comme montré aux figures 1b et 1c, dans d'autres modes de réalisation, l'aimant monobloc 3 formant couronne peut être porté par un corps formant noyau ou support pour l'aimant monobloc 3. Dans le cas d'un double entrefer, un tel corps 13a porte l'aimant monobloc 3 faisant couronne en vis-à-vis de chaque entrefer.

L'ensemble formé par le rotor R et les stators 1, 1a est disposé autour d'un arbre de sortie 9 du moteur M solidaire du rotor R. Des roulements 10 permettent un mouvement de rotation du rotor R et de l'arbre de sortie 9 autour d'un axe longitudinal du moteur M le long duquel s'étend l'arbre 9.

Une carcasse 11 permet de maintenir, de protéger et d'assembler les pièces du moteur M. L'arbre de sortie 9 du rotor R présente un épaulement 13 s'étendant perpendiculairement à l'arbre 9 dans une portion médiane de l'arbre 9. Cet épaulement 13 est logé dans un évidement central 12 pratiqué dans l'aimant monobloc 3.

Quand ceux-ci sont supportés par un corps 13a, le corps 13a peut être dans le prolongement de l'épaulement 13 et être solidarisé directement avec l'épaulement 13.

Selon l'invention, le rotor R qui est destiné à un moteur M électromagnétique à flux axial comporte un aimant monobloc 3, c'est-à-dire un seul aimant.

L'aimant monobloc 3 présente deux faces opposées, chacune des faces opposées étant destinées à être en vis-à-vis d'un circuit magnétique respectif. Les deux faces sont de forme non plane en présentant des ondulations, les ondulations faisant face au circuit magnétique respectif.

En prenant le mode de réalisation montré aux figures 1 et 1a, l'aimant monobloc 3 est unique et d'un seul tenant avec des ondulations formées sur ses deux faces.

En prenant le mode de réalisation montré aux figures 1, 1a à 1c, l'aimant est unique et d'un seul tenant avec des ondulations formées sur ses deux côtés. Dans ce cas, cet aimant unique comprend une rainure pour la réception d'un corps 13a.

Avantageusement, pour un moteur électromagnétique M à deux entrefers, comme montré à aux figures 1, 1a, 1b et 1c ce sont les deux faces opposées de la couronne, destinées à délimiter un entrefer respectif de l'aimant 3 ou du de l'aimant monobloc 3, qui sont ondulées.

La face la plus interne au corps de l'aimant monobloc 3 opposée donc la plus éloignée de l'entrefer et du stator 1, 1a respectif est avantageusement plane pour être appliquée ou non contre le corps 13a, les ondulations n'étant présentes que sur les faces externes de l'aimant monobloc 3 délimitant un entrefer.

Il est cependant possible que l'aimant monobloc 3 présente des ondulations sur ses deux faces. Ceci est par exemple très avantageux étant donné qu'il n'y a qu'un unique aimant pour deux entrefers. Ceci peut être vu à la figure 1a. La figure 1c montre un aimant monobloc 3 de chaque côté d'un corps 13a servant de noyau.

Comme il est visible à la figure 2, les ondulations sur un aimant monobloc 3 peuvent former une succession d'arrêtés supérieures 15 et inférieures 14. Une seule arrête par type d'arrêté supérieure ou inférieure est référencée à la figure. Les arrêtes inférieures et supérieures 14, 15 s'étendent sensiblement en direction radiale de la couronne formée par l'aimant monobloc 3.

Le long d'une même arrête supérieure 15 ou inférieur 14, l'aimant ou le groupe peut conserver la même épaisseur e ou bien l'épaisseur le long d'une même arrête supérieure 15 ou inférieur 14 peut diminuer plus on se rapproche de la portion centrale de la couronne formée par l'aimant monobloc 3, cette portion centrale étant avantageusement creuse en formant un évidement 12.

Chaque arrête supérieure 15 peut être intercalée entre deux arrêtes inférieures 14 en faisant varier l'épaisseur e de l'aimant monobloc 3 sous forme d'une sinusoïde quand elle est dépliée. L'épaisseur e de la couronne formée par l'aimant monobloc 3 prise dans respectivement dans un des cercles concentriques centrés sur la couronne peut présenter une forme de sinusoïde. Cette sinusoïde est avantageusement de période constante.

La figure 3 montre une vue de face d'un groupe de pôles d'aimants 3 qui ne fait pas partie de la présente invention mais la forme et l'inclinaison des aimants peut être extrapolable à un aimant monobloc 3. Le groupe de pôles d'aimants 3 présente sensiblement une forme de couronne comportant un évidement central 12. Cela serait aussi le cas pour un aimant unitaire monobloc formant une couronne.

La figure 3a montre une coupe selon A-A et la figure 3b selon une coupe B-B du groupe de pôles d'aimants 3 de forme polygonale ondulée permettent de repérer l'évolution dans l'épaisseur e de la couronne formée par l'aimant ou le groupe de pôles d'aimants 3 de l'ondulation entre une valeur minimale 14a et une valeur maximale 15a correspondant respectivement à une arrête inférieure 14 et une arrête supérieure 15.

La variation de ces deux valeurs pendant la rotation du rotor R permet de réduire le couple de détente. Pour le groupe de pôles d'aimants 3 formant couronne, le sens de l'aimantation Aim est parallèle à l'axe de rotation de l'arbre de sortie 9 montré aux figures 1 et 1b.

Aux figures 2 et 3, il est représenté respectivement un aimant monobloc 3 unitaire. A la figure 3, le groupe de pôles d'aimants 3 est formé d'une pluralité de pôles d'aimants dont un seul est référencé 3a à cette figure.

A la figure 2, chaque face de l'aimant monobloc est constituée successivement de plusieurs pôles magnétiques 3a. Chaque pôle 3a est incliné d'un angle d'inclinaison β des extrémités d'un pôle magnétique 3a par rapport à leur position initiale passant par le milieu d'une encoche 2b, l'angle d'inclinaison β induisant un angle de décalage α du rotor R autour de son axe de rotation. A la figure 3, des pôles 3a sont montrés en pointillés, leur position initiale étant formée par l'angle θ1, l'angle α représentant le décalage de l'angle θ1 lorsque les extrémités inférieures ou extérieures des pôles sont inclinées.

L'aimant monobloc 3 peut comprendre des tuiles polygonales ondulées reliées entre elles directement ou indirectement par des moyens de solidarisation 16, les moyens de solidarisation 16 étant latéraux à l'aimant monobloc et/ou disposés en dessous de l'aimant monobloc 3. Les tuiles polygonales peuvent prendre diverses formes, par exemple des tuiles triangulaires ou en forme de quadrilatères.

Les moyens de solidarisation 16 peuvent aussi être présents sous l'aimant monobloc 3 en permettant le maintien de l'aimant monobloc 3 contre une face associée du corps 13a du rotor R, quand un corps est présent.

L'aimant monobloc 3 peut porter une frette formant couronne en matériau composite, la frette étant prévue à la périphérie de l'aimant 3 pour son encadrement. Cette frette peut servir essentiellement à absorber les forces centrifuges.

Quand un corps de support de l'aimant monobloc 3 est présent, l'aimant monobloc 3 peut s'étendre jusqu'à la périphérie de la face de l'aimant monobloc 3 le portant ou faire saillie radialement de la périphérie de ladite face.

La frette peut entourer directement le bord de l'aimant monobloc 3 extérieur au rotor R et est donc en contact direct avec le bord le plus externe de l'aimant monobloc 3.

Pour une tuile triangulaire, un sommet du triangle peut pointer avantageusement vers le centre du rotor R. En alternative, comme il peut être vu à la figure 3, une arrête inférieure 14 peut former un angle β avec un bord d'une tuile.

Une arrête supérieure 15 peut former un angle θ/2 avec le même bord d'une tuile formant pôle magnétique 3a de l'aimant monobloc 3, bien que les bords des tuiles de l'aimant monobloc 3 se trouvent dans un plan radial de la couronne et que les arrêtes inférieures 14 et 15 ne sont pas dans ce plan radial, en étant par exemple inclinées par rapport à ce plan radial ou en se trouvant dans un plan parallèle respectif à ce plan radial.

Dans une autre forme de réalisation, les bords et les moyens de solidarisation des tuiles de l'aimant monobloc 3 peuvent correspondre respectivement à une arrête supérieure 15 ou à une arrête inférieure 14.

Les moyens de solidarisation 16 maintiennent les tuiles de l'aimant monobloc 3 en direction axiale du rotor R tandis qu'ils leur laissent un jeu limité en direction radiale lui permettant d'effectuer un travail en compression contre la frette.

Ceci permet de faire travailler l'aimant monobloc 3 en compression plutôt qu'en étirement ce qui est plus favorable pour sa résistance mécanique en compression qui peut être dix fois supérieure en compression qu'en traction.

Les pôles d'aimants 3a d'un aimant monobloc 3 peuvent être au nombre de huit, ce qui n'est pas limitatif.

Il est aussi possible de conserver une séparation entre les pôles 3a de l'aimant monobloc 3 ou d'utiliser une bride intercalée entre deux pôles de l'aimant monobloc. Dans le cas d'une branche de séparation ou bride, la branche ou bride est avantageusement d'une épaisseur moindre que l'aimant monobloc 3 afin qu'elle soit plus éloignée du stator 1, 1a que l'aimant monobloc 3 afin qu'il y ait moins de pertes magnétiques dues à la circulation de courants au sein de ces branches.

Chaque pôle magnétique 3a de l'aimant monobloc 3 peut présenter un petit côté circulaire délimitant ensemble l'évidement central 12. Quand l'aimant monobloc 3 comprend au moins une tuile, cette tuile peut présenter un plus grand côté circulaire formant le bord le plus externe du groupe de pôles 3a du rotor R. Les plus grands côtés circulaires des pôles 3a forment le bord externe de l'aimant monobloc 3 qui peut être avantageusement en contact direct avec la frette.

Dans une forme de réalisation de la présente invention, les moyens de solidarisation 16 peuvent être formés par une colle appliquée entre les pôles 3a de l'aimant monobloc 3 et la face associée du corps du rotor R.

La colle peut être résistante à un décollement de l'aimant monobloc 3 en direction axiale tout en présentant une élasticité en direction radiale, afin de permettre à chaque pôle ou aimant un jeu limité en direction radiale lui permettant d'effectuer un travail en compression contre la frette.

Le corps 13a, si présent, l'épaulement 13 et l'arbre 9 du rotor R peuvent être à base de fer, en alliage de fer, en titane, en oxyde de titane ou en un alliage contenant du titane. La part de titane peut ne pas être la part prépondérante dans l'alliage.

La frette peut être métallique ou en matériau composite en étant formée de fibres ou de bandes choisies parmi les fibres de verre, de carbone, de fibres polymères ou minérales.

Les fibres ou bandes consécutives peuvent être de nature ou de dimensions différentes. Il peut, par exemple, être mélangé avec des fibres de verre de composition différente, des fibres de plastique, par exemple en PEEK, en polyaramide ou des fibres de composite.

L'aimant monobloc 3 peut être choisi parmi les aimants ferrites, les aimants à base de terres rares comme des aimants néodyme-fer-bore ou des aimants samarium cobalt, des aimants à base d'aluminium, de nickel et de cobalt, avec ou sans liant thermoplastique.

Un tel rotor R peut faire partie d'un moteur électromagnétique M présentant au moins un stator 1, 1a portant une série d'éléments de bobinage et au moins un rotor R portant au moins un aimant 3.

Ledit au moins un rotor R présente ses deux faces circulaires portant l'aimant monobloc 3 réparti circulairement sur sa face associée, ledit au moins un rotor R étant encadré de chaque côté par un stator 1, 1a. Le moteur M électromagnétique présente deux entrefers, le corps du rotor R portant sur chacun de ses côtés une face de l'aimant monobloc 3, chaque face présentant des ondulations. Ceci est visible aux figures 1, 1a, 1b et 1c.

Quand l'aimant 3 monobloc est constitué successivement de plusieurs pôles magnétiques 3a, chaque pôle 3a est incliné d'un angle β par rapport à un pas d'encoche correspondant à un angle d'ouverture formé d'une ouverture angulaire d'une dent du stator 1, 1a portant un élément de bobinage et d'une ouverture angulaire d'une encoche 2b 2b, les encoches 2b logeant les éléments de bobinage 2, 2a faisant partie du circuit magnétique du stator 1, 1a.

L'invention n'est nullement limitée aux modes de réalisation décrits et illustrés qui n'ont été donnés qu'à titre d'exemples.

## Revendications

1. Rotor (R) destiné à un moteur (M) électromagnétique à flux axial comportant au moins un aimant (3) formant une couronne, avec deux faces dudit au moins un aimant (3) destinées à être respectivement en vis-à-vis et à délimiter un entrefer avec un circuit magnétique d'un stator (1, 1a), **caractérisé en ce que** ledit au moins un aimant (3) est monobloc avec deux faces opposées destinées à être en vis-à-vis d'un circuit magnétique respectif, les deux faces étant de forme non plane en présentant des ondulations.

2. Rotor (R) selon la revendication 1, dans lequel les ondulations forment sur chaque face une succession d'arrêtes supérieures (15) et inférieures (14), les arrêtes (14, 15) s'étendant sensiblement en direction du centre de la couronne formée par l'aimant (3) monobloc.

3. Rotor (R) selon la revendication précédente, dans lequel, sur chaque face, chaque arrête supérieure (15) est intercalée entre deux arrêtes inférieures (14) en faisant varier une épaisseur (e) de l'aimant (3) monobloc sous forme d'une sinusoïde quand elle est dépliée.

4. Rotor (R) selon la revendication précédente, dans lequel la sinusoïde est de période constante.

5. Rotor (R) selon l'une quelconque des revendications 1 à 4, dans lequel chaque face de l'aimant monobloc est constituée successivement de plusieurs pôles magnétiques (3a), chaque pôle (3a) étant incliné d'un angle d'inclinaison (β) des extrémités d'un pôle magnétique (3a) par rapport à leur position initiale passant par le milieu d'une encoche (2a), l'angle d'inclinaison (β) induisant un angle de décalage (α) du rotor (R) autour de son axe de rotation.

6. Rotor (R) selon la revendication précédente, dans lequel l'aimant monobloc (3) comprend des tuiles polygonales ondulées reliées entre elles directement ou indirectement par des moyens de solidarisation (16), les moyens de solidarisation (16) étant latéraux à l'aimant monobloc (3) et/ou disposés en dessous de l'aimant monobloc (3).

7. Rotor (R) selon la revendication précédente, dans lequel les moyens de solidarisation (16) permettent de maintenir les tuiles polygonales ondulées contre un corps (13) faisant partie du rotor (R).

8. Rotor (R) selon l'une quelconque des revendications précédentes, dans lequel l'aimant (3) monobloc présente un évidement central (12).

9. Rotor (R) selon la revendication précédente, dans lequel le rotor (R) comprend un arbre de sortie (9) présentant un épaulement (13) s'étendant perpendiculairement à l'arbre (9) dans une portion médiane de l'arbre (9), l'épaulement (13) étant logé dans l'évidement central (12) de l'aimant (3) monobloc.

10. Rotor (R) selon l'une quelconque des revendications précédentes, dans lequel l'aimant (3) monobloc est choisi parmi les aimants ferrites, les aimants à base de terres rares comme des aimants néodyme-ferbore ou des aimants samarium cobalt, des aimants à base d'aluminium, de nickel et de cobalt, avec ou sans liant thermoplastique.

11. Moteur et/ou génératrice électromagnétique, **caractérisé en ce qu'**il comprend au moins un rotor (R) selon l'une quelconque des revendications précédentes, le moteur ou la génératrice ayant un fonctionnement réversible, ledit au moins un rotor (R) étant intercalé entre deux stators (1, 1a).

12. Moteur et/ou génératrice électromagnétique selon la revendication précédente, dans lequel, quand l'aimant (3) monobloc est constitué successivement de plusieurs pôles magnétiques (3a), chaque pôle (3a) est incliné d'un angle (β) par rapport à un pas d'encoche correspondant à un angle d'ouverture formé d'une ouverture angulaire d'une dent du stator (1, 1a) portant un élément de bobinage et d'une ouverture angulaire d'une encoche (2b), les encoches (2b) logeant les éléments de bobinage (2, 2a) faisant partie du circuit magnétique du stator (1, 1a).

**Patentansprüche**

1. Rotor (R), der für einen elektromagnetischen Axialflussmotor (M) bestimmt ist, mindestens einen Magneten (3) umfassend, der einen Kranz bildet, wobei zwei Seiten des mindestens einen Magneten (3) dazu bestimmt sind, jeweils einem Luftspalt mit einem Magnetkreis eines Stators (1, 1a) gegenüberzuliegen und denselben zu begrenzen, **dadurch gekennzeichnet, dass** der mindestens eine Magnet (3) einstückig ist, wobei zwei entgegengesetzte Seiten dazu bestimmt sind, einem jeweiligen Magnetkreis gegenüberzuliegen, wobei die zwei Seiten, unter Aufweisen von Wellen, von unebener Form sind.

2. Rotor (R) nach Anspruch 1, wobei die Wellen auf jeder Seite eine Abfolge von oberen (15) und unteren (14) Kanten bilden, wobei sich die Kanten (14, 15) im Wesentlichen in Richtung des Zentrums des Kranzes erstrecken, der vom einstückigen Magneten (3) gebildet wird.

3. Rotor (R) nach dem vorstehenden Anspruch, wobei auf jeder Seite jede obere Kante (15) zwischen zwei unteren Kanten (14) eingefügt ist unter Variieren einer Dicke (e) des einstückigen Magneten (3) in Form einer Sinuskurve, wenn dieselbe aufgefaltet ist.

4. Rotor (R) nach dem vorstehenden Anspruch, wobei die Sinuskurve von konstanter Periode ist.

5. Rotor (R) nach einem der Ansprüche 1 bis 4, wobei jede Seite des einstückigen Magneten sukzessiv von mehreren Magnetpolen (3a) aufgebaut wird, wobei jeder Pol (3a) um einen Neigungswinkel (β) der Enden eines Magnetpols (3a) in Bezug auf deren Anfangsposition, die durch die Mitte eines Spalts (2a) verläuft, geneigt ist, wobei der Neigungswinkel (β) einen Versatzwinkel (α) des Rotors (R) um dessen Drehachse bedingt.

6. Rotor (R) nach dem vorstehenden Anspruch, wobei der einstückige Magnet (3) vieleckige gewellte Kacheln umfasst, die durch Befestigungsmittel (16) direkt oder indirekt miteinander verbunden sind, wobei die Befestigungsmittel (16) seitlich zum einstückigen Magneten (3) liegen und/oder unter dem einstückigen Magneten (3) angeordnet sind.

7. Rotor (R) nach dem vorstehenden Anspruch, wobei es die Befestigungsmittel (16) ermöglichen, die vieleckigen gewellten Kacheln an einem Körper (13) zu halten, der Bestandteil des Rotors (R) bildet.

8. Rotor (R) nach einem der vorstehenden Ansprüche, wobei der einstückige Magnet (3) eine zentrale Aussparung (12) aufweist.

9. Rotor (R) nach dem vorstehenden Anspruch, wobei der Rotor (R) eine Ausgangswelle (9) umfasst, die eine Schulter (13) aufweist, welche sich in einem mittleren Abschnitt der Welle (9) senkrecht zur Welle (9) erstreckt, wobei die Schulter (13) in der zentralen Aussparung (12) des einstückigen Magneten (3) aufgenommen ist.

10. Rotor (R) nach einem der vorstehenden Ansprüche, wobei der einstückige Magnet (3) ausgewählt ist aus den Ferritmagneten, den Magneten auf Basis seltener Erden wie etwa Neodym-Eisen-Bor-Magneten oder Samarium-Cobalt-Magneten, Magneten auf Basis von Aluminium, von Nickel und von Cobalt, mit oder ohne thermoplastisches Bindemittel.

11. Elektromagnetischer Motor und/oder Generator, **dadurch gekennzeichnet, dass** er mindestens einen Rotor (R) nach einem der vorstehenden Ansprüche umfasst, wobei der Motor oder der Generator eine reversible Funktion aufweist, wobei der mindestens eine Rotor (R) zwischen zwei Statoren (1, 1a) eingefügt ist.

12. Elektromagnetischer Motor und/oder Generator nach dem vorstehenden Anspruch, wobei, wenn der einstückige Magnet (3) sukzessiv von mehreren Magnetpolen (3a) aufgebaut wird, jeder Pol (3a) um einen Winkel (β) in Bezug auf einen Spaltabstand geneigt ist, der einem Öffnungswinkel entspricht, welcher von einer Winkelöffnung eines Zahns des Stators (1, 1a), der ein Spulenelement trägt, und einer Winkelöffnung eines Spalts (2b) gebildet wird, wobei die Spalten (2b) die Spulenelemente (2, 2a) aufnehmen, die Bestandteil des Magnetkreises des Stators (1, 1a) bilden.

**Claims**

1. A rotor (R) intended for an axial-flow electromagnetic motor (M) including at least one magnet (3) forming a ring, with two faces of said at least one magnet (3) intended to be respectively facing each other and to delimit an air gap with a magnetic circuit of a stator (1, 1a), **characterized in that** said at least one magnet (3) is in one piece with two opposite faces intended to be facing a respective magnetic circuit, the two faces being non-planar in shape having corrugations.

2. The rotor (R) of claim 1, in which the corrugations form on each face a succession of upper (15) and lower (14) edges, the edges (14, 15) extending substantially in the direction of the centre of the ring formed by the one-piece magnet (3).

3. The rotor (R) of the preceding claim, in which, on each face, each upper edge (15) is interposed between two lower edges (14) by varying a thickness (e) of the one-piece magnet (3) in the form of a sinusoid when unfolded.

4. The rotor (R) of the preceding claim, in which the sinusoid is of constant period.

5. The rotor (R) as claimed in any of claims 1 to 4, in which each face of the one-piece magnet is constituted successively of several magnetic poles (3a), each pole (3a) being inclined by an angle of inclination (β) of the ends of a magnetic pole (3a) relative to their initial position passing through the middle of a slot (2a), the angle of inclination (β) inducing an offset angle (α) of the rotor (R) about the axis of rotation thereof.

6. The rotor (R) of the preceding claim, in which the one-piece magnet (3) comprises corrugated polygonal tiles directly or indirectly connected to each other by securing means (16), the securing means (16) being lateral to the one-piece magnet (3) and/or disposed below the one-piece magnet (3).

7. The rotor (R) of the preceding claim, in which the securing means (16) allow maintaining the corrugated polygonal tiles against a body (13) forming part of the rotor (R).

8. The rotor (R) as claimed in any of the preceding claims, in which the one-piece magnet (3) has a central recess (12).

9. The rotor (R) of the preceding claim, in which the rotor (R) comprises an output shaft (9) having a shoulder (13) extending perpendicularly to the shaft (9) in a median portion of the shaft (9), the shoulder (13) being housed in the central recess (12) of the one-piece magnet (3).

10. The rotor (R) as claimed in any of the preceding claims, in which the one-piece magnet (3) is selected from ferrite magnets, rare-earth-based magnets like neodymium-iron-boron magnets or samarium cobalt magnets, magnets based on aluminium, nickel and cobalt, with or without thermoplastic binder.

11. A motor and/or electromagnetic generator, **characterized in that** it comprises at least one rotor (R) as claimed in any of the preceding claims, the motor or the generator having a reversible operation, said at least one rotor (R) being interposed between two stators (1, 1a).

12. The motor and/or electromagnetic generator of the preceding claim, in which, when the one-piece magnet (3) is constituted successively of several magnetic poles (3a), each pole (3a) is inclined by an angle (β) relative to a slot pitch corresponding to an opening angle formed by an angular opening of a stator (1,1a) tooth carrying a winding element and by an angular opening of a slot (2b), the slots (2b) housing the winding elements (2, 2a) forming part of the magnetic circuit of the stator (1, 1a).

**FIG. 1**

**FIG. 1a**

**FIG. 1b**

**FIG. 1c**

**FIG. 2**

Fig. 3a

Fig. 3b

FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103904852 A

- JP S5553164 A